# EUROPEAN PATENT APPLICATION

(11) **EP 3 018 567 A1**
(43) Date of publication of application: **11.05.2016**
(21) Application number: 14819814.6
(22) Date of filing: 10.06.2014
(51) Int. Cl.: G06F 3/048, G06F 11/28

(54) **USER-INTERFACE REVIEW METHOD, DEVICE, AND PROGRAM**

(30) Priority: 05.07.2013 JP 2013141839
(71) Applicant: NEC Solution Innovators, Ltd., Tokyo 136-8627 (JP)
(72) Inventor: NAKAO, Yusuke, Tokyo 136-8627 (JP)
(74) Representative: Vossius & Partner Patentanwälte Rechtsanwälte mbB
(86) International application number: PCT/JP2014/003095
(87) International publication number: WO 2015/001721

(57) **Abstract**

A user-interface review method includes: acquiring information regarding the content of an operation performed on a screen by a user and a change in the screen caused in response to the operation; and reviewing whether or not the information regarding the content of the operation and the change in the screen caused in response to the operation conforms to a review rule that contains a user-interface review criterion.

## Description

### Technical Field

The present invention relates to a user-interface review method, a user-interface review device, and a user-interface review program for reviewing a user interface for a screen.

### Background Art

In the development of a user interface for a screen such as a web page or the like, the quality of usability or the like depends on a developer in some cases and therefore a specialist needs to review the user interface. The number of people, however, who can review user interfaces is limited, which leads to a problem that the review requires a large cost and time.

Non Patent Literature (NPL) 1 discloses a tool for automatically evaluating usability, such as readability of a web page on a screen and understandability of the content, and extracting problems to be improved.

NPL 2 discloses an automation tool for testing application software. The automation tool automatically performs a test according to a test case created by a user in advance before the user performs debugging.

### Citation List

### Non Patent Literature(s)

NPL 1: "Automatic Usability Testing Method for Web Pages" by Takehiro Suzuki, master's thesis, Nara Institute of Science and Technology, February 14, 1999
NPL 2: "Selenium Japanese document, Selenium-IDE," [Online],[Searched on June 4, 2013], Internet <URL: http://oss.infoscience.co.jp/seleniumhq/docs/03_selenium_ide.html#id12>

### Summary of Invention

### Technical Problem

The tool described in NPL 1, however, automatically evaluates a web page on the basis of a source code described using hypertext markup language (HTML). Therefore, this tool has difficulty in evaluating an action of a screen caused in response to a user's operation, though it is able to evaluate an initial display or the like.

Moreover, in the automation tool disclosed in NPL 2, a user needs to set up a test case and an action result required for verification for each screen to be reviewed. Therefore, in the case of reviewing the usability of the screen by using the automation tool, a specialist is required to perform the review, which leads to a problem of a large cost and time.

Therefore, it is an object of the present invention to provide a user-interface review method, a user-interface review device, and a user-interface review program capable of easily evaluating the usability related to an action of a screen caused in response to a user's operation.

### Solution to Problem

A user-interface review method according to the present invention includes: acquiring information regarding the content of an operation performed on a screen by a user and a change in the screen caused in response to the operation; and reviewing whether or not the information regarding the content of the operation and the change in the screen caused in response to the operation conforms to a review rule that contains a user-interface review criterion.

A user-interface review device according to the present invention includes: a review-rule storage unit storing a review rule that contains a user-interface review criterion; an information acquisition unit acquiring information regarding the content of an operation performed on a screen by a user and a change in the screen caused in response to the operation; and a review unit reviewing whether or not the information regarding the content of the operation and the change in the screen caused in response to the operation conforms to the review rule.

A user-interface review program according to the present invention causes a computer to perform information acquisition processing for acquiring information regarding the content of an operation performed on a screen by a user and a change in the screen caused in response to the operation and review processing for reviewing whether or not the information regarding the content of the operation and the change in the screen caused in response to the operation conforms to a review rule that contains a user-interface review criterion.

### Advantageous Effects of Invention

According to the present invention, usability regarding an action of a screen caused in response to a user's operation is able to be easily evaluated.

### Brief Description of Drawings

[Fig. 1] It depicts a block diagram illustrating the configuration of an exemplary embodiment of a user-interface review device according to the present invention.
[Fig. 2] It depicts a flowchart illustrating an action of the exemplary embodiment of the user-interface review device according to the present invention.
[Fig. 3] It depicts an explanatory diagram illustrating a screen before and after a mouse over operation in a first example.
[Fig. 4] It depicts an explanatory diagram illustrating a screen transition in a second example. [Fig. 5] It depicts an explanatory diagram illustrating a selection screen and a screen after the transition in a third example.
[Fig. 6] It depicts an explanatory diagram illustrating a transition from a screen to be reviewed to a help screen in a fifth example.
[Fig. 7] It depicts a block diagram illustrating the configuration of the main part of the user-interface review device according to the present invention.

### Description of Embodiments

Exemplary embodiments of a user-interface review device according to the present invention will be described hereinafter with reference to the accompanying drawings.

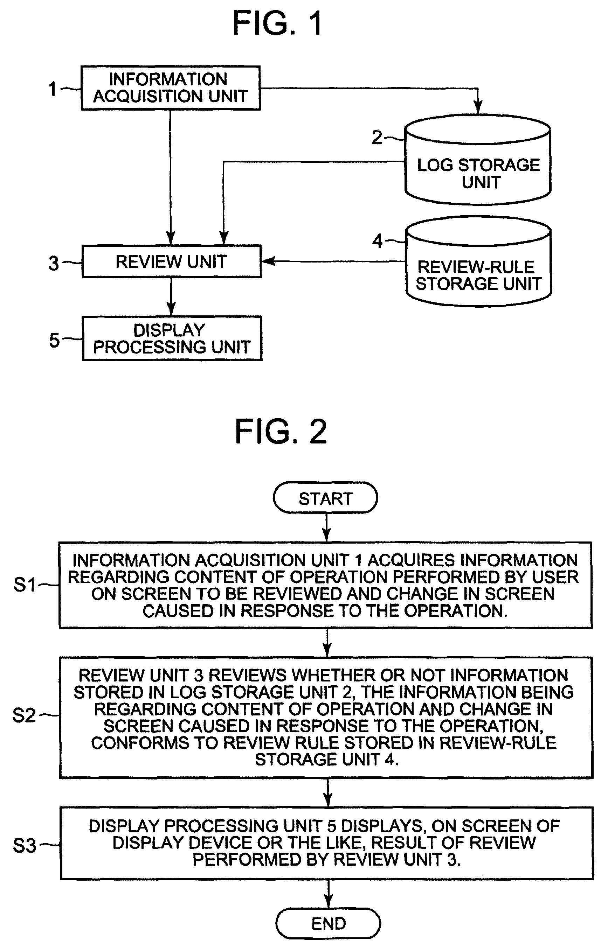

Fig. 1 is a block diagram illustrating the configuration of a user-interface review device according to this exemplary embodiment. As illustrated in Fig. 1, the user-interface review device of this exemplary embodiment includes an information acquisition unit 1, a log storage unit 2, a review unit 3, a review-rule storage unit 4, and a display processing unit 5. The information acquisition unit 1, the review unit 3, and the display processing unit 5 are implemented by an information processor such as, for example, hardware designed so as to perform specific arithmetic processing or the like or a central processing unit (CPU) operating according to a program. A log storage unit 2 and a review-rule storage unit 4 are implemented by a storage device such as, for example, a commonly-used hard disk drive (HDD).

The information acquisition unit 1 acquires information regarding the content of an operation performed on a screen by a user and a change in the screen caused in response to the operation. The information acquisition unit 1 acquires, for example, screen information before and after the operation as information regarding the change in the screen caused in response to the operation. The screen information is information indicating the display content of the screen such as, for example, colors or the content of a text.

Moreover, the information acquisition unit 1 may acquire, for example, time information regarding a change in the screen as the information regarding the change in the screen caused in response to the operation. The information acquisition unit 1 may acquire, for example, time information indicating the time of clicking a button for performing a screen transition and time information indicating the time of completion of reading the screen after the screen transition.

Moreover, the information acquisition unit 1 may acquire information for identifying a screen as information regarding a change in the screen caused in response to an operation. The information acquisition unit 1 may acquire, for example, information for identifying a help screen called from a plurality of screens.

The log storage unit 2 stores information regarding the content of an operation performed by a user on a screen to be reviewed and a change in the screen caused in response to the operation that the information acquisition unit 1 acquired.

The review-rule storage unit 4 stores one or more review rules. Each contains a user-interface review criterion of the screen. The review rule is related to usability of a user interface displayed on the screen such as readability of a web page or the like for a user, understandability of the content, and the like. The user previously records the review rule.

The review unit 3 reviews whether or not the information regarding the content of an operation stored in the log storage unit 2 and a change in the screen caused in response to the operation conforms to the review rule stored in the review-rule storage unit 4. The review unit 3 may perform a review when a specific operation has been performed or when a user instructs the review unit 3 to perform the review.

The display processing unit 5 displays a result of the review performed by the review unit 3 on a screen of a display device or the like. The display method may be any method. For example, the display processing unit 5 may list items not conforming to the review along with review rules used for reviews. Moreover, the display processing unit 5 may display the review result on the screen to be reviewed.

Subsequently, the action of the user-interface review device according to this exemplary embodiment will be described below. Fig. 2 is a flowchart illustrating the action of the user-interface review device of the exemplary embodiment.

First, the information acquisition unit 1 acquires information regarding the content of an operation performed by a user on a screen to be reviewed and a change in the screen caused in response to the operation (step S1).

The review unit 3 reviews whether or not the information regarding the content of an operation stored in the log storage unit 2 and a change in the screen caused in response to the operation conforms to the review rule stored in the review-rule storage unit 4 (step S2).

The display processing unit 5 displays a result of the review performed by the review unit 3 on the screen of the display device or the like (step S3).

The user-interface review device of this exemplary embodiment evaluates the usability of the screen on the basis of the information regarding the content of an operation performed by the user and a change in the screen caused in response to the operation, thereby enabling evaluation of the usability of an action of the screen caused in response to the user's operation. Moreover, the user-interface review device according to this exemplary embodiment evaluates the usability of the screen on the basis of the previously stored review rule. Therefore, even if a reviewing person is not a specialist, the person is able to easily evaluate the usability.

### Example 1

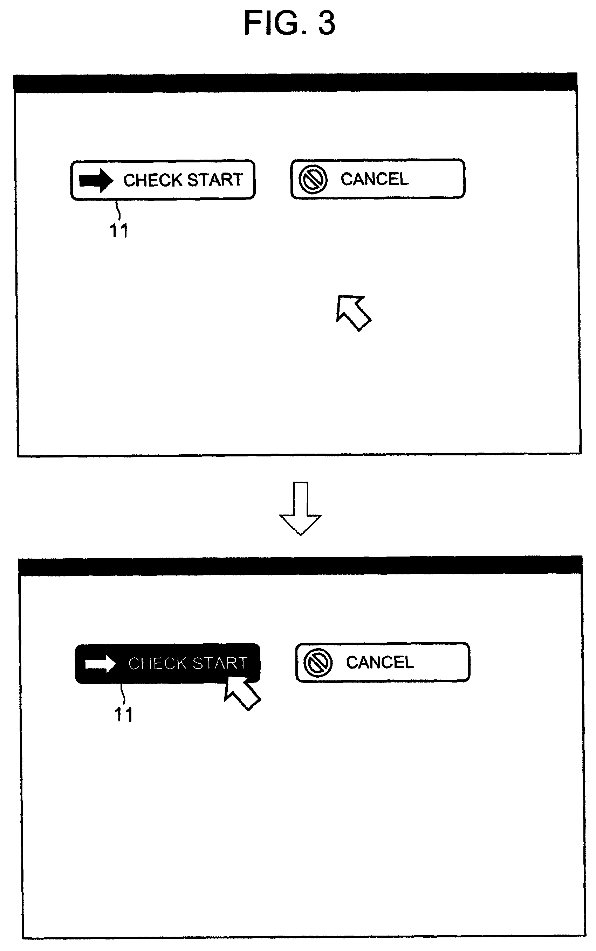

Subsequently, a first example (Example 1) of the user-interface review device of this exemplary embodiment will be described below. In this example, the user-interface review device reviews whether or not a button is displayed with an expression different from an expression employed before the operation when a mouse over operation is performed on the button. Fig. 3 is an explanatory diagram illustrating a screen before and after the mouse over operation in the first example.

The information acquisition unit 1 acquires screen information in a state where the mouse over operation is not performed on the element to be reviewed and stores the screen information in the log storage unit 2. For example, if a "Check start" button 11 illustrated in Fig. 3 is to be reviewed, the information acquisition unit 1 acquires information indicating the display content of the button on the screen where the mouse over operation is not performed on the "Check start" button 11 and stores the information in the log storage unit 2. At this time point, background color is white and text color is black in the "Check start" button 11.

Subsequently, the information acquisition unit 1 acquires the screen information in a state where the mouse over operation is performed on the element to be reviewed and stores the screen information in the log storage unit 2. When the mouse over operation is performed on the "Check start" button 11 as illustrated in the lower-side screen in Fig. 3, the information acquisition unit 1 acquires information illustrating the display content of the button at that time and stores the information in the log storage unit 2. In the instance illustrated in Fig. 3, the background color is black and the text color is white when the mouse over operation is performed on the "Check start" button 11.

The information acquisition unit 1 acquires, for example, a class name in cascading style sheets (CSS) and text information in CSS as information indicating the display content of the button. For example, in order to acquire the class name in CSS and the text information in CSS, a screen designer previously writes a program so that a log is output at an occurrence of a mouse over event. Moreover, the information acquisition unit 1 may acquire an image as screen information.

The review unit 3 reviews whether or not the screen information before and after the mouse over operation stored in the log storage unit 2 conforms to the review rule stored in the review-rule storage unit 4. In this example, it is assumed that the review-rule storage unit 4 stores a review rule that a button is displayed with an expression different from an expression employed before the operation when a mouse over operation is performed on the button. The review unit 3 reviews whether or not, for example, the class name in CSS and the text information in CSS acquired as the screen information are different between those before and after the mouse over operation. In the instance illustrated in Fig. 3, the "Check start" button 11 conforms to the review rule and therefore the review unit 3 determines that the "Check start" button 11 conforms to the review rule.

The display processing unit 5 displays whether or not the "Check start" button 11 conforms to the review rule, on the screen of the display device or the like, as a review result.

Moreover, the user-interface review device of this example may review whether or not an element such as a button is displayed with different expressions between before and after the operation, regarding not only the mouse over operation but also a click operation or the like.

The user-interface review device of this example is able to easily review whether or not the display of the button or the like changes between before and after the mouse over operation. Therefore, the designer is able to create a user-friendly screen without a specialist's review.

Moreover, the user-interface review device of this example does not review how the display of the element has changed and therefore the user does not need to create the review rule for each screen, thereby enabling the user-interface review device to cope with reviews of various screens.

### Example 2

Subsequently, a second example (Example 2) of a user-interface review device of this exemplary embodiment will be described below. In this example, in the case of inputting information on a certain input screen, performing a screen transition, and thereafter returning to the input screen, the user-interface review device reviews whether or not the input content is displayed again. The reason why this review is performed is that the user does not need to input the same content if the input content is retained.

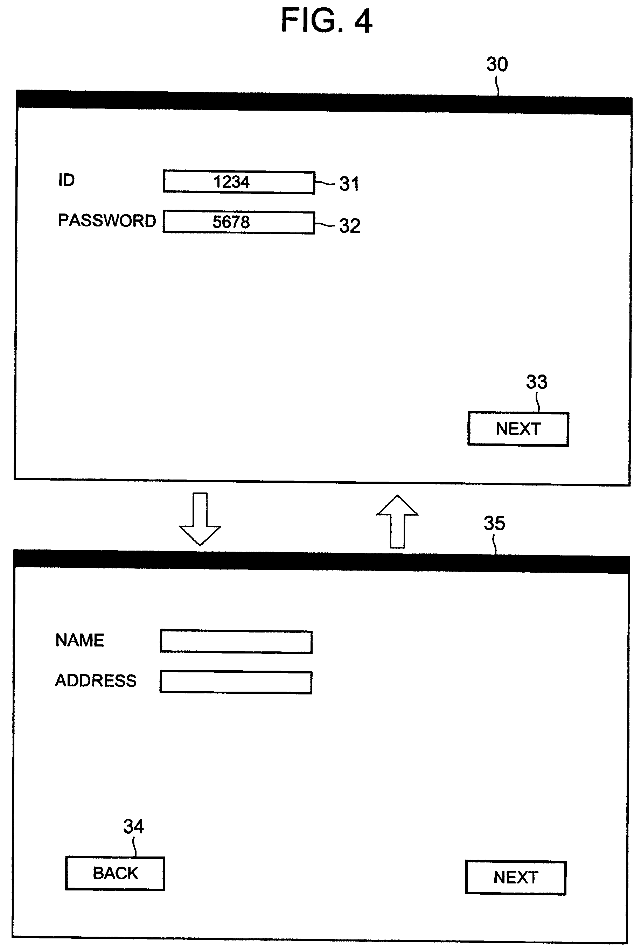

When information such as a text or the like is input on the screen and a button for transition to another screen is clicked, the information acquisition unit 1 stores the input information into the log storage unit 2. Fig. 4 is an explanatory diagram illustrating a screen transition in this example. In the instance illustrated in Fig. 4, the information acquisition unit 1 stores an ID (1234) and a password (5678) input into the log storage unit 2 when a "Next" button 33 is clicked after the input of the information into a text box 31 and a text box 32 on a screen 30.

Moreover, when returning from the screen after the transition to the input screen, the information acquisition unit 1 acquires screen information in the input screen. In the instance illustrated in Fig. 4, the information acquisition unit 1 acquires the contents input in the text box 31 and the text box 32 when returning to the screen 30 after a "Back" button 34 is clicked on the screen 35.

The review unit 3 compares the screen information of the input screen before the screen transition stored in the log storage unit 2 with the screen information of the input screen obtained at the time of returning after the transition to another screen to review whether or not the screen information is identical. In the instance illustrated in Fig. 4, the information acquisition unit 1 compares the information input in the text box 31 and the text box 32 on the screen 30 before the screen transition with the information input in the text box 31 and the text box 32 after the returning subsequent to the transition to the screen 35. If the input information is identical as a result of the comparison, the review unit 3 determines that the state is normal.

The display processing unit 5 displays whether or not the state is normal as a review result on the screen of the display device or the like.

Although review is performed regarding text information in the instance illustrated in Fig. 4, the user-interface review device of this example may review whether or not the input information is retained not only regarding the text information, but also regarding information selected from a pull-down menu, the presence or absence of check marks in a check box and a radio button, or the like, similarly.

The user-interface review device of this example may review whether or not the input content is retained after error processing is performed in the case of an occurrence of an error in the input content. The error processing is, for example, processing of transition to an error display screen, processing of displaying an error message in a popup window, or processing of displaying an error message in the input screen.

The user-interface review device of this example is able to easily review whether or not the information input before the screen transition is retained after the transition to another screen and then returning back to the input screen. Thereby, the designer is able to create a user-friendly screen without a specialist's review.

### Example 3

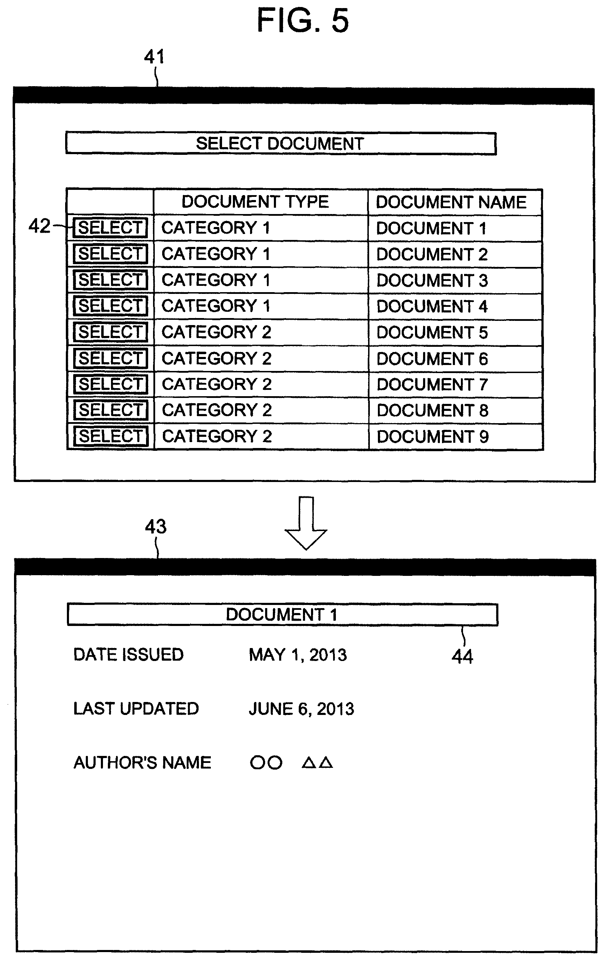

Subsequently, a third example (Example 3) of the user-interface review device of this exemplary embodiment will be described below. In this example, the user-interface review device reviews whether or not information indicating a processing object in the screen is displayed within the screen. Fig. 5 is an explanatory diagram illustrating a selection screen and a screen after the transition in the third example.

When the user selects a certain item, the information acquisition unit 1 acquires the name of the item and stores the name into the log storage unit 2. If a selection button 42 corresponding to an item "Document 1" is clicked on the screen 41 in the instance illustrated in Fig. 5, the information acquisition unit 1 acquires the name of the item "Document 1" present in the same row as the selection button 42 and stores the name into the log storage unit 2.

Although a document type "Category 1" is described in the same row as the selection button 42 in the instance illustrated in Fig. 5, a plurality of "Category 1" document types are present in the same column. Therefore, the information acquisition unit 1 acquires the name of the item "Document 1" which is present in the same row as the selection button 42 and is a unique name in the same column and stores the name into the log storage unit 2.

Subsequently, the information acquisition unit 1 acquires screen information of the screen after the transition. In the instance illustrated in Fig. 5, the information acquisition unit 1 acquires screen information of the screen 43. Since a title name "Document 1" is described in a title box 44 on the screen 43, the information acquisition unit 1 acquires the screen information including the title name and stores the screen information into the log storage unit 2.

The review unit 3 reviews whether or not the name of the item selected by the user is present on the screen after the transition on the basis of the review rule. In the instance illustrated in Fig. 5, the name "Document 1" is described on the screen 43 and therefore the review unit 3 determines that the state is normal.

The review unit 3 may review, for example, whether or not the name of the item selected by the user is present in the title part, instead of reviewing whether or not the name of the item is included in the entire screen after the transition. Alternatively, the review unit 3 may review whether or not the name is present within a specific range in the screen such as, for example, within the upper half of the screen.

The display processing unit 5 displays whether or not the review result is normal on the screen of the display device or the like. The display processing unit 5 lists, for example, whether or not the review result is normal for each reviewed item.

The user-interface review device of this example is able to easily review whether or not the information indicating the processing object in the screen is displayed within the screen. Therefore, the designer is able to create a user-friendly screen without a specialist's review.

### Example 4

Subsequently, a fourth example (Example 4) of the user-interface review device of this exemplary embodiment will be described below. In this example, the user-interface review device reviews whether or not the transition time is within a predetermined time period when the screen transition is performed.

The information acquisition unit 1 acquires the time when the screen transition is started. The information acquisition unit 1 acquires, for example, time information indicating the time of clicking a button for performing the screen transition and stores the time information into the log storage unit 2.

Subsequently, the information acquisition unit 1 acquires the time when the screen transition is completed. The information acquisition unit 1 acquires, for example, the time information indicating the time of the completion of reading the screen after the transition and stores the time information into the log storage unit 2.

The review unit 3 calculates the transition time on the basis of the time information indicating the time of clicking stored in the log storage unit 2 and the time information indicating the completion of the screen transition. Then, the review unit 3 checks whether or not the transition time is within the predetermined time period described in the review rule stored in the review-rule storage unit 4. The predetermined time period described in the review rule is previously determined to be such a numerical value that the user does not feel unpleasant. The predetermined time period is, for example, two seconds.

The display processing unit 5 displays whether or not the transition time is within the predetermined time period as the review result on the screen of the display device or the like. For example, if the screen transition is performed a lot of times, the display processing unit 5 lists the review results in the screen transitions.

The user-interface review device of this example is able to easily check whether or not the screen transition completes within the predetermined time period. Therefore, the designer is able to create a user-friendly screen without a specialist's review.

### Example 5

Subsequently, a fifth example (Example 5) of the user-interface review device of this exemplary embodiment will be described below. In this example, the user-interface review device reviews whether or not a help content corresponding to the screen before the transition is displayed in the case of transition to a help screen.

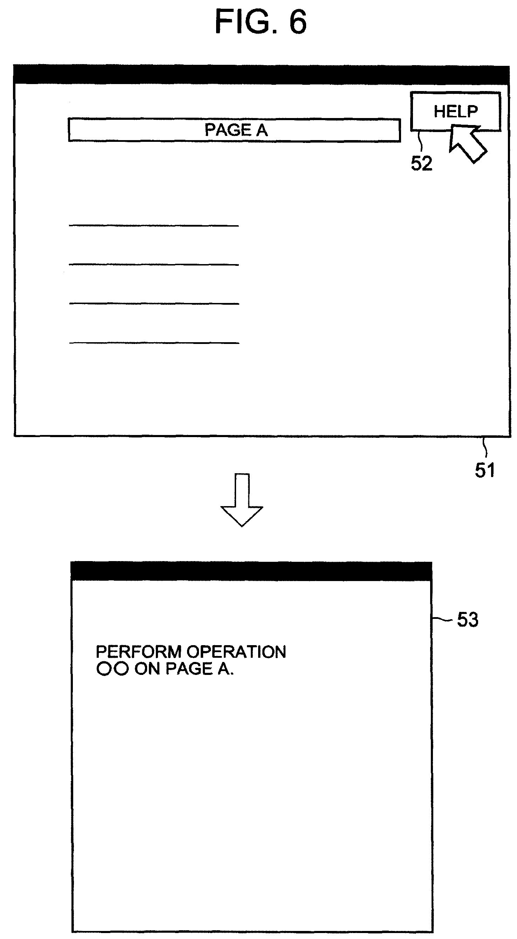

Fig. 6 is an explanatory diagram illustrating a transition from a screen to be reviewed to a help screen. In the example illustrated in Fig. 6, a help screen 53 providing the description of an operation procedure of a page A is displayed at the time of clicking on a help button 52 within the screen 51 displaying the page A. Therefore, the user is able to check the help related to the page A immediately. The reason why this kind of review is performed is that, if the help button on the page A is pressed and thereafter, for example, a contents screen or the like of the help is displayed, the user needs to search for the help related to the page A, which is not user-friendly.

If a button for transition to a help screen is clicked, the information acquisition unit 1 acquires information for identifying the help screen after the transition and stores the information into the log storage unit 2. The information acquisition unit 1 acquires, for example, the uniform resource locator (URL) of the help screen as the information for identifying the help screen after the transition. Moreover, the information acquisition unit 1 may acquire the screen information of the screens before and after the transition.

In the example illustrated in Fig. 6, a help button 52 is clicked on the screen 51 by the user and the help screen 53 is displayed. The information acquisition unit 1 acquires information for identifying the help screen 53.

The review unit 3 reviews whether or not the information for identifying the help screen is different from others for each screen before transition. Specifically, the review unit 3 reviews whether or not all URLs of the help screen shifted from a plurality of screens are different from each other. If all URLs are different from each other, the review unit 3 determines that the state is normal. Moreover, for example, if text information is acquired as screen information on each screen and transition is made from a certain screen to a help screen, the review unit 3 may review on the basis of the text information whether or not the help content corresponding to the screen before the transition is displayed.

The display processing unit 5 displays whether or not the review result is normal on the screen of the display device or the like. If the review unit 3 performs a review based on the text information, the display processing unit 5 may list whether or not each screen is normally displayed.

The user-interface review device of this example is able to easily review whether or not the help content corresponding to the screen before the transition is displayed in the case of transition to the help screen. Thereby, the designer is able to create a user-friendly screen without a specialist's review.

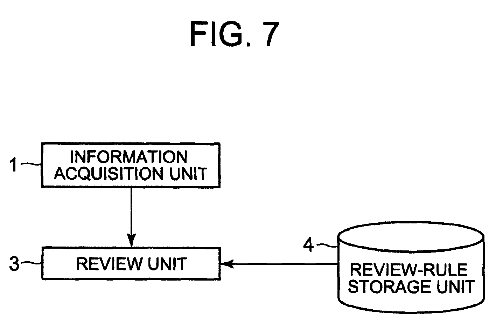

Fig. 7 is a block diagram illustrating the configuration of the main part of the user-interface review device according to the present invention. The user-interface review device includes, as main constituent elements, a review-rule storage unit 4 for storing a review rule that contains a user-interface review criterion, an information acquisition unit 1 for acquiring information regarding the content of an operation performed on a screen by a user and a change in the screen caused in response to the operation, and a review unit 3 for reviewing whether or not the information regarding the content of the operation and the change in the screen caused in response to the operation conforms to the review rule.

Moreover, the above exemplary embodiments also disclose user-interface review devices described in the following (1) to (6).
(1) An information acquisition unit (for example, the information acquisition unit 1) may be configured to acquire screen information before and after the operation as information regarding the change in the screen caused in response to the operation.
(2) A user-interface review device in which a review unit (for example, the review unit 3) reviews whether or not an element where a mouse over operation is performed is displayed with a different expression from before the operation in the case where the mouse over operation is performed on the element (for example, a button) displayed on the screen to be reviewed. According to the user-interface review device, whether or not the display of a button or the like differs between before and after the mouse over operation is able to be easily reviewed.
(3) A user-interface review device may be configured in such a way that, in the case where a user performs a screen transition after inputting information on an input screen and then returns back to the input screen, a review unit (for example, the review unit 3) reviews whether or not the information concerned is displayed again on the input screen. According to the user-interface review device, whether or not information having been input before screen transition is retained after the transition to another screen and returning back to the previous screen is able to be easily reviewed.
(4) A user-interface review device may be configured in such a way that, in the case where a user selects one item and thereby a screen transition occurs, a review unit (for example, the review unit 3) reviews whether or not the name of the item is present on the screen after the transition. According to the user-interface review device, whether or not information indicating a processing object on the screen is displayed within the screen is able to be easily reviewed.
(5) A user-interface review device may be configured in such a way that a information acquisition unit (for example, the information acquisition unit 1) acquires time information indicating the time of clicking a button for performing a screen transition and time information indicating the time of completion of reading the screen after the screen transition as information regarding a change in the screen caused in response to the operation and that a review unit (for example, the review unit 3) reviews whether or not a time period required for the screen transition is within a predetermined time period. According to the user-interface review device, whether or not the screen transition completes within the predetermined time period is able to be easily checked.
(6) A user-interface review device may be configured in such a way that an information acquisition unit (for example, the information acquisition unit 1) acquires pieces of information for identifying help screens called from a plurality of screens as information regarding the change in the screen caused in response to the operation and that a review unit (for example, the review unit 3) reviews whether or not the pieces of information for identifying the help screens are different from each other. According to the user-interface review device, whether or not the help content corresponding to the screen before the transition is displayed is able to be easily reviewed in the case of transition to the help screen.

This application claims priority to Japanese Patent Application No. 2013-141839 filed on July 5, 2013, and the entire disclosure thereof is hereby incorporated herein by reference.

Although the present invention has been described with reference to the exemplary embodiments and examples hereinabove, the present invention is not limited thereto. A variety of changes, which can be understood by those skilled in the art, may be made in the configuration and details of the present invention within the scope thereof.

### Industrial Applicability

The present invention is preferably applied to the review of usability of a user interface for a web site.

### Reference Signs List

- 1: Information acquisition unit
- 2: Log storage unit
- 3: Review unit
- 4: Review-rule storage unit
- 5: Display processing unit

## Claims

1. A user-interface review method comprising:
acquiring information regarding the content of an operation performed on a screen by a user and a change in the screen caused in response to the operation; and
reviewing whether or not the information regarding the content of the operation and the change in the screen caused in response to the operation conforms to a review rule that contains a user-interface review criterion.

2. The user-interface review method according to claim 1, comprising:
acquiring screen information before and after the operation as information regarding the change in the screen caused in response to the operation.

3. The user-interface review method according to claim 2, comprising:
reviewing whether or not, in the case where a mouse over operation is performed on an element displayed on the screen, the element is displayed with a different expression from before the operation.

4. The user-interface review method according to claim 2, comprising:
reviewing whether or not, in the case where the user performs screen transition after inputting information on an input screen and then returns back to the input screen, the information is displayed again on the input screen.

5. The user-interface review method according to claim 2, comprising:
reviewing whether or not, in the case where the user selects one item and thereby screen transition occurs, the name of the item is present in the screen after the transition.

6. The user-interface review method according to claim 1, comprising:
acquiring time information indicating the time of clicking a button for performing screen transition and time information indicating the time of completion of reading the screen after the screen transition as information regarding the change in the screen caused in response to the operation; and
reviewing whether or not a time period required for the screen transition is within a predetermined time period.

7. The user-interface review method according to claim 1, comprising:
acquiring pieces of information for identifying help screens called from a plurality of screens as information regarding the change in the screen caused in response to the operation; and
reviewing whether or not the pieces of information for identifying the help screens differ from each other.

8. A user-interface review device comprising:
a review-rule storage unit storing a review rule that contains a user-interface review criterion;
an information acquisition unit acquiring information regarding the content of an operation performed on a screen by a user and a change in the screen caused in response to the operation; and
a review unit reviewing whether or not the information regarding the content of the operation and the change in the screen caused in response to the operation conforms to the review rule.

9. The user-interface review device according to claim 8, wherein the information acquisition unit acquires screen information before and after the operation as information regarding the change in the screen caused in response to the operation.

10. The user-interface review device according to claim 9, wherein the review unit reviews whether or not, in the case where a mouse over operation is performed on an element displayed on the screen, the element is displayed with a different expression from before the operation.

11. The user-interface review device according to claim 9, wherein the review unit reviews whether or not, in the case where the user performs screen transition after inputting information on an input screen and then returns back to the input screen, the information is displayed again on the input screen.

12. The user-interface review device according to claim 9, wherein the review unit reviews whether or not, in the case where the user selects one item and thereby screen transition occurs, the name of the item is present in the screen after the transition.

13. The user-interface review device according to claim 8, wherein:
the information acquisition unit acquires time information indicating the time of clicking a button for performing screen transition and time information indicating the time of completion of reading the screen after the screen transition as information regarding the change in the screen caused in response to the operation; and
the review unit reviews whether or not a time period required for the screen transition is within a predetermined time period.

14. The user-interface review device according to claim 8, wherein:
the information acquisition unit acquires pieces of information for identifying help screens called from a plurality of screens as information regarding the change in the screen caused in response to the operation; and
the review unit reviews whether or not the pieces of information for identifying the help screens differ from each other.

15. A user-interface review program causing a computer to perform:
information acquisition processing for acquiring information regarding the content of an operation performed on a screen by a user and a change in the screen caused in response to the operation; and
review processing for reviewing whether or not the information regarding the content of the operation and the change in the screen caused in response to the operation conforms to a review rule that contains a user-interface review criterion.

16. The user-interface review program according to claim 15, causing the computer to acquire screen information before and after the operation as information regarding the change in the screen caused in response to the operation in the information acquisition processing.

17. The user-interface review program according to claim 16, causing the computer to review whether or not, in the case where a mouse over operation is performed on an element displayed on the screen, the element is displayed with a different expression from before the operation in the review processing.

18. The user-interface review program according to claim 16, causing the computer to review whether or not, in the case where the user performs screen transition after inputting information on an input screen and then returns back to the input screen, the information is displayed again on the input screen in the review processing.

19. The user-interface review program according to claim 16, causing the computer to review whether or not, in the case where the user selects one item and thereby screen transition occurs, the name of the item is present in the screen after the transition in the review processing.

20. The user-interface review program according to claim 15, causing the computer to:
acquire time information indicating the time of clicking a button for performing screen transition and time information indicating the time of completion of reading the screen after the screen transition as information regarding the change in the screen caused in response to the operation in the information acquisition processing; and
review whether or not a time period required for the screen transition is within a predetermined time period in the review processing.

21. The user-interface review program according to claim 15, causing the computer to:
acquire pieces of information for identifying help screens called from a plurality of screens as information regarding the change in the screen caused in response to the operation in the information acquisition processing; and
review whether or not the pieces of information for identifying the help screens differ from each other in the review processing.
